# EUROPÄISCHE PATENTANMELDUNG

(11) **EP 2 202 255 A1**
(43) Veröffentlichungstag der Anmeldung: **30.06.2010**
(21) Anmeldenummer: 09179048.5
(22) Anmeldetag: 14.12.2009
(51) Int. Cl.: C08G 12/42, C08K 5/053, C08K 5/3412, C08J 5/24

(54) **Wässrige Melaminharzmischung, Verfahren zu deren Herstellung und deren Verwendung zum Tränken von saugfähigem Trägermaterial, sowie unter Verwendung der Melaminharzmischung hergestelltes Verbundmaterial**

(30) Priorität: 18.12.2008 EP 08172181
(71) Anmelder: BASF SE, 67056 Ludwigshafen (DE)
(72) Erfinder: Lunkwitz, Ralph, 67434, Neustadt (DE); Reif, Martin, 67354, Römerberg (DE); Gehrmann, Cornelius, 67061, Ludwigshafen (DE)

(57) **Zusammenfassung**

Die vorliegende Erfindung betrifft eine wässrige Melaminharzmischung mit einem Gehalt an Harz im Bereich von 50 bis 70 Gew.-% bezogen auf die wässrige Melaminharzmischung, wobei im Harz Melamin und Formaldehyd in einem Molverhältnis von 1 : 1,3 bis 1 : 2,0 vorliegen und das Harz 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam, jeweils bezogen auf die wässrige Melaminharzmischung, enthält.

## Beschreibung

Die vorliegende Erfindung betrifft eine wässrige Melaminharzmischung mit einem Gehalt an Harz im Bereich von 50 bis 70 Gew.-% bezogen auf die wässrige Melaminharzmischung, wobei im Harz Melamin und Formaldehyd in einem Molverhältnis von 1:1,3 bis 1:2,0 vorliegen und das Harz 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam, jeweils bezogen auf die wässrige Melaminharzmischung enthält.

Ferner betrifft die Erfindung ein Verfahren zur Herstellung einer wässrigen Melaminharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

DE-A 38 14 292 schlägt vor, zumindest partiell mit Alkoholen mit 2 bis 6 C-Atomen oder auch mit Glykolen, beispielsweise Polyethylenglykol, veretherte MelaminFormaldehyd-Kondensate als Tränkharze zu verwenden. Glyzerin wird nicht offenbart.

WO 2005/095514 (BASF Aktiengesellschaft) beschreibt eine wässrige Melaminharzmischung mit mehrwertigen Alkoholen, 2-(2-Phenoxyethoxy)-ethanol) und/oder Polyethylenglycol und gegebenenfalls Caprolactam als Modifizierungsmittel und deren Verwendung zum Tränken von saugfähigem Papier.

US 2,920,984 beschreibt eine Mischung aus, unter anderem, Glyzerin, Harnstoff-Formaldehyd-Harz und Wasser zum Tränken von fasrigem Zellulosematerial.

Wässrige Melaminharzmischungen werden in der Technik auch als "Tränkharze" bezeichnet.

Die im Stand der Technik vorgestellten Tränkharze sowie die daraus hergestellten Imprägnate (in der Technik auch Tränkharzfilme oder Overlayfilme genannt) lassen noch Raum für Verbesserungen.

Wichtige Verarbeitungsparameter des Tränkharzes, zum Beispiel die Penetration des Tränkharzes in das Papier, der homogene, gleichmäßige Verlauf des Harzes im oder auf dem Papier lassen noch zu wünschen übrig, insbesondere bei hohen Verarbeitungsgeschwindigkeiten zur Herstellung der Tränkharzfilme.

Auch besteht nach wie vor Bedarf Imprägnate aus Melaminharzmischungen und damit getränktem Material, zum Beispiel Overlayfilme, weniger spröde zu machen und somit die Rissbildung in dem Overlayfilm zu reduzieren sowie die Transparenz und Wasserdampfbeständigkeit des Overlayfilms zu verbessern.

Neuere Entwicklungen im Bereich Biotreibstoffe lassen größere Mengen preiswertes Glyzerin (1,2,3-Propantriol) anfallen. Dieses Material wäre als nachwachsender Rohstoff attraktiv.

Der Erfindung lag daher die Aufgabe zugrunde, eine wirtschaftlich und energetisch attraktive Melaminharzmischung und deren Herstellweise aufzufinden, die sich zum Tränken von saugfähigem Material und zur Herstellung von Imprägnaten (zum Beispiel Overlayfilmen oder Tränkharzfilmen) mit geringer Sprödigkeit und geringer Rissbildung, guter Transparenz und Wasserdampfbeständigkeit eignet.

Es wurde daher die in den Ansprüchen definierte wässrige Melaminharzmischung gefunden sowie ein Verfahren zur Herstellung einer wässrigen Melaminharzmischung und deren Verwendung zum Tränken von saugfähigem Material, sowie das erhältliche Imprägnat, ein Verfahren zur Herstellung eines Verbundmaterials unter Verwendung dieses Imprägnats sowie das so erhältliche Verbundmaterial.

Die wässrige Melaminharzmischung hat einem Gehalt an Harz im Bereich von 50 bis 70 Gew.-%, vorzugsweise 50 bis 65 Gew.-%, jeweils bezogen auf die wässrige Melaminharzmischung.

Das Harz der wässrigen Melaminharzmischung hat ein Molverhältnis von Melamin zu Formaldehyd von 1 : 1,3 bis 1 : 2,0, vorzugsweise von 1 : 1,5 bis 1 : 1,9.

Die wässrige Melaminharzmischung enthält 1 bis 10 Gew.-%, vorzugsweise 3 bis 8 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam, bezogen auf die wässrige Melaminharzmischung.

Die wässrige Melaminharzmischung enthält 1 bis 5 Gew.-%, vorzugsweise 1 bis 3 Gew.-% Komponente M1 ( Diethylenglycol), jeweils bezogen auf die wässrige Melaminharzmischung.

Die erfindungsgemäße wässrige Melaminharzmischung enthält 1 bis 5 Gew.-%, vorzugsweise 1 bis 3 Gew.-% Polyethylenglykol mit einer mittleren Molmasse von 200 bis 1500, vorzugsweise einer mittleren Molmasse von 300 bis 1000, besonders bevorzugt, einer mittleren Molmasse von 400 bis 600 (Komponente M2), jeweils bezogen auf die wässrige Melaminharzmischung.

Die erfindungsgemäße wässrige Melaminharzmischung enthält 1 bis 5 Gew.-%, vorzugsweise 1 bis 3 Gew.-% Komponente M3 (Glycerin), jeweils bezogen auf die wässrige Melaminharzmischung.

Ferner kann die erfindungsgemäße wässrige Melaminharzmischung 0 bis 8 Gew.-%, bevorzugt 0 bis 4 Gew.-% Caprolactam (Komponente M4), jeweils bezogen auf die wässrige Melaminharzmischung, enthalten.

Besonders bevorzugt enthält die erfindungsgemäße wässrige Melaminharzmischung kein Caprolactam.

Eine besonders bevorzugte erfindungsgemäße wässrige Melaminharzmischung enthält 3 bis 8 Gew.-% einer Komponente M, ausgewählt aus der Gruppe bestehend aus 1 bis 3 Gew.-% M1) Diethylenglykol, 1 bis 3 Gew.-% M2) Polyethylenglykol mit einer mittleren Molmasse von 200 bis 1500 und 1 bis 3 Gew.% M3) Glyzerin, jeweils bezogen auf die wässrige Melaminharzmischung.

Neben dem Melaminharz und der Komponente M kann die erfindungsgemäße wässrige Melaminharzmischung weitere Zusatzstoffe in einer Menge von jeweils kleiner 1 Gew.-% bezogen auf die wässrigen Melaminharzmischung enthalten, zum Beispiel Salze organischer Säuren, Amine, Ethanolamine.

Die Summe aller Komponenten Melaminharz, Komponente M, gegebenenfalls weitere Zusatzstoffe und Wasser der wässrigen Melaminharzmischung beträgt 100 Gew.-%.

In der Regel weist die wässrige Melaminharzmischung eine Dichte bei 20 °C im Bereich von 1,1 bis 1,5 g/ml, bevorzugt 1,15 bis 1,45 g/ml und besonders bevorzugt 1,2 bis 1,4 g/ml auf.

Ferner weist die wässrige Melaminharzmischung in der Regel einen pH-Wert im Bereich von 8 bis 12, bevorzugt 8,5 bis 11 und besonders bevorzugt 9 bis 10,5 auf.

Der Trübungspunkt der wässrigen Melaminharzmischung liegt vorteilhaft im Bereich von 35 bis 65 °C, bevorzugt im Bereich von 40 bis 60 °C, insbesondere im Bereich von 45 bis 60 °C.

Zur Messung des Trübungspunktes geht man wie folgt vor.

1 g (ein Gramm) der wässrigen Melaminharzmischung wird bei Reaktionstemperatur dem Reaktor entnommen und mit 5 g (fünf Gramm) entionisiertem Wasser praktisch derselben Temperatur wie sie die entnommene Probe hat, verdünnt und anschließend durch externe Kühlung mit einer Geschwindigkeit von ca. 10 °C pro Minute abgekühlt. Der Trübungspunkt ist die Temperatur, bei der "vom oberen Temperaturwert kommend" eine Trübung auftritt, die mit bloßem Auge bei Durchsicht durch ein Probegefäß mit einer Schichtdicke von 1 cm sichtbar ist.

In der Regel weist die wässrige Melaminharzmischung eine Viskosität bei 20 °C von 50 bis 3000 mPa·s auf, bevorzugt 70 bis 200 mPa·s.

Die Wasserverträglichkeit der wässrigen Melaminharzmischung liegt in der Regel bei mindestens 1 : 1,5 (Harz : Wasser).

Die Wasserverträglichkeit wird wie folgt ermittelt. Zu einem Gramm (1 g) wässriger Melaminharzmischung gibt man bei 20 °C durch vorsichtiges Zudosieren, zum Beispiel durch Zutitrieren oder Zupipettieren, Wasser. Die Menge Wasser bei der eine bleibende Trübung in der wässrigen Melaminharzmischung auftritt wird in das Verhältnis zur eingesetzten Menge der wässrigen Melaminharzmischung gesetzt.

Ferner betrifft die Erfindung ein Verfahren zur Herstellung der wässrigen Melaminharzmischung, wobei Melamin und Formaldehyd in einem Molverhältnis von 1 : 1,3 bis 1 : 2,0, , vorzugsweise von 1 : 1,5 bis 1 : 1,9 in einem wässrigen Medium mit 1 bis 10 Gew.-%, vorzugsweise 3 bis 8 Gew.-%, jeweils bezogen auf die wässrige Melaminharzmischung, einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam bei einem pH-Wert von 8 bis 10 und bei einer Temperatur von 60 bis 110 °C umgesetzt werden.

In einem bevorzugten Verfahren zur Herstellung der wässrigen Melaminharzmischung setzt man in einem wässrigen Medium Melamin und Formaldehyd in einem Molverhältnis von 1 : 1,5 bis 1 : 1,9 mit 3 bis 8 Gew.-% einer Komponente M, ausgewählt aus der Gruppe bestehend aus 1 bis 3 Gew.-% M1) Diethylenglykol, 1 bis 3 Gew.-% M2) Polyethylenglykol mit einer mittleren Molmasse von 200 bis 1500 und 1 bis 3 Gew.% M3) Glyzerin, jeweils bezogen auf die wässrige Melaminharzmischung, bei einem pH-Wert von 8 bis 10 und bei einer Temperatur von 60 bis 110 °C um.

Die Komponenten M1) bis M4) können alle zusammen zu Anfang der Umsetzung präsent sein oder es kann nur ein Teil dieser Komponenten M1) bis M4) zu Anfang der Reaktion präsent sein, und der Rest der Komponenten M1) bis M4) kann zu jedem Zeitpunkt während der Reaktion, also während die Temperatur des Reaktionsgemisches im Bereich von 60 bis 110 °C liegt, in einer Menge von 1 bis 10 Gew.-%, vorzugsweise 3 bis 8 Gew.-%, jeweils bezogen auf die wässrige Melaminharzmischung, auf einmal oder portionsweise zudosiert werden.

Ungeachtet der Verfahrensvariante wird die Kondensationsreaktion in der Regel so lange durchgeführt, bis die wässrige Melaminharzmischung einen Trübungspunkt im Bereich von 35 bis 65 °C, bevorzugt im Bereich von 40 bis 60 °C, insbesondere im Bereich von 45 bis 60 °C aufweist.

Bei einer weiteren Variante des Verfahrens zur Herstellung der wässrigen Melaminharzmischung (im folgenden auch "Stufenvariante" genannt) wird (i) Melamin und Formaldehyd in einem Molverhältnis von 1 : 1,3 bis 1 : 2,0, in einem wässrigen Medium mit 1 bis 10 Gew.-%, bezogen auf die wässrige Melaminharzmischung, mit einem Teil der Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam bei einem pH-Wert von 8 bis 10 und bei einer Temperatur von 60 bis 110 °C umgesetzt, (ii) die Reaktionsmischung auf eine Temperatur im Bereich von 10 bis 50 °C abgekühlt und der unter (i) nicht-zugesetzte Teil der Komponente M zu der abgekühlten Reaktionsmischung zugegeben.

Die Formulierung "einem Teil der Komponente M" kann eine eher qualitative Bedeutung haben, nämlich, dass aus der Gruppe M1) bis M4) eines oder mehrere der Mitglieder dieser Gruppe in Schritt (i) vollständig nicht eingesetzt wird oder werden und erst in Schritt (ii) eingesetzt wird oder werden, wobei in Schritt (i) mindestens eines der Mitglieder der Gruppe M1) bis M4) eingesetzt wird.

Die Formulierung "einem Teil der Komponente M" kann aber auch eine eher quantitative Bedeutung haben, nämlich, dass aus der Gruppe M1) bis M4) eines oder mehrere der Mitglieder dieser Gruppe in Schritt (i) mengenmäßig (quantitativ) nur zu einem Teil eingesetzt wird oder werden und erst in Schritt (ii) die Restmenge oder Restmengen eingesetzt wird oder werden.

In einer bevorzugten Stufenvariante des Verfahrens wird die Reaktionsmischung auf eine Temperatur im Bereich von 10 bis 50 °C abgekühlt und die Komponenten M1) bis M4), vorzugsweise die Komponenten M2) Polyethylenglykol und/oder M3) Glyzerin zu der abgekühlten Reaktionsmischung jeweils in einer Menge von 1 bis 5 Gew.-%, vorzugsweise 1 bis 3 Gew.-%, jeweils bezogen auf die wässrige Melaminharzmischung, zugegeben.

Üblicherweise wird die Abkühlung dann vorgenommen, wenn die Reaktion abgeschlossen ist, was mit der Trübungsmessung bestimmt werden kann. Vorteilhaft wird die Kondensationsreaktion so lange durchgeführt, bis die wässrige Melaminharzmischung einen Trübungspunkt von 35 bis 65 °C aufweist.

Vorteilhaft liegt der pH-Wert der wässrigen Kondensationsphase im Verfahren zur Herstellung der wässrigen Melaminharzmischung, im Bereich von 8,0 bis 10, bevorzugt 8,4 bis 9,4, insbesondere 9,0 bis 9,5 .

Der Temperaturbereich im Verfahren zur Herstellung der erfindungsgemäßen Melaminharzmischung liegt bevorzugt bei 80 bis 110 °C und besonders bevorzugt bei 90 bis 105 °C.

Das Molverhältnis von Melamin zu Wasser beträgt vorteilhaft 1 : 0,1 bis 3,0, bevorzugt 0,1 bis 2,8 und besonders bevorzugt 0,1 bis 2,5. Zur Einstellung dieser Bereiche kann gegebenenfalls Wasser durch Destillation bei Normaldruck oder auch Unterdruck entfernt werden.

Melamin wird üblicherweise in fester Form eingesetzt. Formaldehyd kommt üblicherweise in Form konzentrierter wässriger Lösungen, beispielsweise als 30 bis 60-gewichtsprozentige wässrige Lösung, bevorzugt als 45 bis 55-gewichtsprozentige Lösung, zum Einsatz.

Die Erfindung betrifft ferner die Verwendung der wässrigen Melaminharzmischung zum Tränken von saugfähigem Material, vorzugsweise saugfähigem flächigen Material, besonders bevorzugt saugfähigem dünnem flächigen Material, beispielsweise von Papier, wie Papierbahnen, Papierbögen, Vliesstoffen oder anderen, dem Fachmann geläufigen Geweben und Gewirken. Weiterhin kann die wässrige Melaminharzmischung zur Herstellung von Overlays, imprägnierter Cellulose, insbesondere α-Cellulose, für Laminatfußböden, die beispielsweise mit einer Oberflächenkomponente wie Pigmenten oder oberflächenresistentem Korund versetzt sind, verwendet werden.

Die Erfindung betrifft ferner ein Imprägnat, das dadurch erhältlich ist, dass man ein saugfähiges Material mit einer, wie oben definierten, wässrigen Melaminharzmischung behandelt und anschließend trocknet.

Vorzugsweise ist das saugfähige Material flächig, besonders bevorzugt ist es ein dünnes, saugfähiges flächiges Material, beispielsweise Papier, wie Papierbahnen, Papierbögen, Vliesstoffe oder andere, dem Fachmann bekannte Gewebe und Gewirke.

Die Behandlung des saugfähigen Materials, zum Beispiel durch durch Auftragung der wässrigen Melaminharzmischung, geschieht auf dem, dem Fachmann bekannten Wege, zum Beispiel per Walzen, zum Beispiel Rakeln.

Die Trocknung des mit der wässrigen Melaminharzlösung imprägnierten saugfähigen Materials findet bei dem Fachmann bekannten Bedingungen, beispielsweise bei einer Temperatur im Bereich von 100 bis 150 °C, statt. In der Regel enthalten die so erhältlichen Imprägnate Melaminharz im Bereich von 80 bis 120 g/m², bezogen auf das trockene Melaminharz ("Flächenauftragsgewicht"). Die Restfeuchte so erhältlicher Imprägnate liegt in der Regel im Bereich von 6 bis 8 Gew.-%, bezogen auf das getrocknete Imprägnat.

Weiterhin betrifft die Erfindung ein Verfahren zur Herstellung eines Verbundmaterials, wobei man ein, wie oben beschriebenes, Imprägnat unter Wärme und Druck auf ein Trägermaterial (auch "Substrat" genannt) aufbringt. In einem gut geeigneten Verfahren bringt man das, wie oben beschrieben erhältliche, Imprägnat unter erhöhtem Druck, beispielsweise 1 bis 100 bar, bevorzugt 10 bis 50 bar und besonders bevorzugt 15 bis 25 bar und bei einer Temperatur im Bereich von 60 bis 300 °C mit dem, vorzugsweise bereits mit einem Dekorpapier versehenen, Substrat miteinander in Kontakt.

Als Substrat eigenen sich alle dem Fachmann bekannten, vorzugsweise flächigen, festen Gegenstände aus diversem Material, zum Beispiel Platten. Bevorzugte feste Substrate sind flächig und enthalten Lignocellulose, beispielsweise Holz. Ganz besonders gut geeignete Substrate sind Platten aus mit Aminoplastharz gebundenen Holzspänen oder Holzfasern, zum Beispiel mitteldichte Faserplatten (Medium Density Fiber Boards, MDF) oder hochdichte Faserplatten (High Density Fiber Boards, HDF).

Weiterhin betrifft die Erfindung ein Verbundmaterial, erhältlich wie oben beschrieben. Ein bevorzugtes Verbundmaterial enthält die Schichten (i) Substrat, vorzugsweise aus mit Aminoplastharz gebundenen Holzspänen oder Holzfasern, zum Beispiel mitteldichte Faserplatten (Medium Density Fiber Boards, MDF) oder hochdichte Faserplatten (High Density Fiber Boards, HDF), (ii) ein auf mindestens eine Seite, bevorzugt eine Seite, des Substrats aufgebrachte Dekorpapierschicht und (iii) eine auf dem aus (ii) erhältlichen Körper mindestens einseitig, vorzugsweise auf der Dekorpapierschicht aufgebrachte Schicht aus dem oben beschriebenen Imprägnat (auch Overlayfilm genannt).

Üblicherweise bildet das Substrat (i) im Verbundmaterial den dicksten Bestandteil und üblicherweise sind die Schichten (ii) und (iii) dünne, papierblattstarke Schichten.

### Beispiele

### 1. Herstellung der wässrigen Melaminharzmischung

### 1.a Herstellung der wässrigen Melaminharzmischung Nr. 1a

Die Einsatzstoffe, wie in folgender Tabelle 1a aufgeführt, wurden vorgelegt, zum Sieden erhitzt (ca. 100 °C) und bei dieser Temperatur belassen. In kurzen Zeitabständen wurde eine Probe entnommen und der Trübungspunkt, wie oben beschrieben, bestimmt um den Fortschritt der Kondensation festzustellen.

Bei einem Trübungspunkt von 55 °C wurde das Reaktionsgemisch durch externe Kühlung mit einem kalten Wasserbad abgekühlt. Sobald die Temperatur des Reaktionsgemisches 50 °C erreicht hatte wurden 48 g Polyethylenglykol der Molmasse 200 bis 1500 der Reaktionsmischung hinzugefügt und diese auf Raumtemperatur abkühlen lassen.

Die so erhaltene Mischung wurde wie unten beschrieben weiterverwendet.

**Tabelle 1a: Vorgelegte Einsatzstoffe**

| | |
|---|---|
| Wässriger Formaldehydlösung, 49 Gew.-%ig | 770 g |
| Wasser VE | 514 g |
| Diethylenglykol | 48 g |
| 25 %ige Natronlauge | 1,2 g |
| Melamin (fest) | 891 g |
| Glycerin | 48 g |

### 1.b Herstellung der wässrigen Melaminharzmischung Nr. 1 b (Vergleich)

Die Einsatzstoffe, wie in folgender Tabelle 1 b dargestellt, wurden vorgelegt und, wie für 1 a oben beschrieben, umgesetzt, allerdings ohne Zusatz von Glyzerin. Der Trübungspunkt lag bei diesem Ansatz bei 54 °C.

Die so erhaltene Melaminharzmischung Nr. 1 b wurde wie unten beschrieben weiterverwendet.

**Tabelle 1 b: Vorgelegte Einsatzstoffe**

| | |
|---|---|
| Wässriger Formaldehydlösung, 49 Gew.-%ig | 770 g |
| Wasser VE | 514 g |
| Diethylenglykol | 48 g |
| Caprolactam | 48 g |
| 25 %ige Natronlauge | 1,2 g |
| Melamin (fest) | 891 g |

### 2. Herstellung der Harzflotte und der Imprägnate

Mit den entsprechenden wässrigen Melaminharzmischungen 1a und 1 b wurden wie folgt Imprägnate (Overlayfilme) per "Laborhandimprägnierung" hergestellt:

Zur wässrigen Melaminharzmischung 1 a oder 1 b wurden jeweils 0,4 Gew.-% Härter H 529 der BASF SE, 5 Gew.-% Wasser und 0,05 Gew.-% Kauropal® 933 (nichtionisches Tensid der BASF SE) als Netzmittel, jeweils bezogen auf die resultierende Mischung, auch "Harzflotte" genannt, dazugegeben.

Die jeweilige Flotte 1 a oder 1 b war durch eine Trübzeit von 250 Sekunden charakterisiert.

Die Trübzeit wurde wie folgt gemessen: Eine Probe der jeweiligen Harzflotte im Reagenzglas wurde in ein 100 °C heißes Wasserbad getaucht und gemessen wie lange es dauert, bis der Reagenzglasinhalt trübe wurde.

Die jeweilige Harzflotte 1a oder 1 b wurde in eine Blechwanne gefüllt (Handiprägnierbad). Das jeweils zu imprägnierende Overlaypapier (25 g /m²) wurde in das Handimprägnierbad gelegt und nahm die Harzflotte auf.

Danach wurde die Harzaufnahme des jeweiligen Papiers, wie üblich per Drahtrakeln, eingestellt.

Das jeweilige nasse Overlaypapier wurde dann in einen Umlufttrockenschrank gebracht und bei 120 °C 2 Minuten lang getrocknet.

Per Wägung wurde festgestellt, wieviel Harz aufgetragen wurde. In der Regel kann der oben beschriebene Prozeß einmal oder auch mehrmals wiederholt werden, um das gewünschte Flächenauftragsgewicht von etwa 100g/m² zu erreichen.

Die Restfeuchte des jeweiligen Overlayfilms lag im Bereich von 6 bis 8 Gew.-%, bezogen auf den getrockneten Film.

### 3. Herstellung der mit den jeweiligen Imprägnaten (Overlayfilmen) versehenen Prüfkörper

Auf eine HDF-Platte (ca. 8 mm Dicke, 40 cm x 40 cm) wurde oberseitig handelsüblicher Dekorfilm und darauf der oben beschriebene jeweilige Overlayfilm aufgelegt (Sandwichherstellung). Auf der Rückseite der HDF-Platte wurde ein handelsüblicher "Gegenzugsfilm" aufgelegt um den Verzug des Prüfkörpers zu vermeiden.

Dieses Sandwich wurde in einer Laborpresse bei einer Pressplattentemperatur von 180 °C verpresst. Der Pressdruck von 25 bar wurde 30 Sekunden lang aufrecht erhalten. Die Presse wurde geöffnet, der Prüfkörper herausgenommen und geprüft.

Die Prüfung erfolgte in der Regel an einem Prüfkörper, welcher einen Tag lang bei Raumtemperatur gelagert wurde.

Die Zusammensetzung der wässrigen Melaminharzmischung und die Prüfergebnisse der jeweiligen Prüfkörper sind in Tabelle 2 dargestellt.

### 4. Prüfmethoden

### 4.1 Risse:

Geprüft wurde unter Temperaturwechsel, ob es zu Spannungsrissen in den Beschichtungsmaterialien kommt. Hierzu wurde jeweils ein oben beschriebener Prüfkörper welcher eine Temperatur von ca. 25 °C (Umgebungstemperatur) hatte in einen Trockenschrank mit einer Temperatur von 80 °C eingebracht, dort 16 Stunden bei 80 °C gelassen und anschließend wieder in einer Umgebung von ca. 25 °C auf die Umgebungstemperatur abkühlen lassen.

In der Bewertungsskala bedeutet: "0" keine Risse. 1 und höher bedeutet: mit zunehmendem Zahlenwert, zunehmende entsprechende Rissanzahl.

### 4.2 Transparenz:

Mit den jeweiligen, wie oben beschrieben hergestellten Prüfkörpern wurde die Transparenz mit dem Auge nach dem deutschen Schulnotensystem beurteilt, das heißt 1 = sehr gute Transparenz, ansteigende Zahlen: immer schlechtere Transparenz.

In der Verarbeitungstechnik werden möglichst hohe Transparenz, konkrete Transparenzwerte von 1 bis 2, gefordert.

### 4.3 WD-Test (Widerstandsfähigkeit gegenüber Wasserdampf)

Ein wie oben beschrieben hergestellter Prüfkörper wurde mit der zu testenden Seite nach unten auf die Öffnung eines mit kochendem Wasser gefüllten Erlenmeyerkolbens gelegt und 1 h lang dem Wasserdampf ausgesetzt. Geprüft wurde das optische Aussehen der mit Wasserdampf (100 °C) beaufschlagten Oberfläche.
Gewünscht ist ein möglichst geringer Angriff der Oberfläche, ergo möglichst geringe Veränderung der Oberfläche gegenüber dem Ausgangszustand.

Die Beurteilung geschah mit dem Auge und nach dem deutschen Schulnotensystem, das heißt 1 = kein mit dem Auge sichtbarer Angriff, also sehr gute Wasserdampfwiderstandsfähigkeit, ansteigende Zahlen: immer schlechtere Wasserdampfwiderstandsfähigkeit.

**Tabelle 2: Zusammensetzungen der wässrigen Melaminharzmischungen und Eigenschaften der mit ihnen hergestellten Prüfkörper**

| Komponenten (Gew.-%) | wässrige Melaminharzmischung 1a | wässrige Melaminharzmischung 1b (Vergleich) |
|---|---|---|
| Harzgehalt | 55% | 55% |
| DEG [1] | 2% | 2% |
| PEG [2] | 2% | 2% |
| Glyzerin | 2% | - |
| Caprolactam | - | 2% |
| Summe der Komponenten | 6% | 6% |
| | | |
| Eigenschaften | | |
| Risse | 0 | 0 |
| Transparenz | 1 | 2 |
| WD-Test | 1 | 2 |
| Gesamt | 1 | 2 |

| | | |
|---|---|---|
| [1] DEG: Diethylenglykol [2] PEG: Polyethylenglykol mit einer mittleren Molmasse von 200 bis 1500 | | |

Man erkennt, dass nur die Kombination von drei OH-Komponenten DEG und PEG und Glyzerin die besten Ergebnisse im einzelnen und insgesamt erbringen.

## Patentansprüche

1. Wässrige Melaminharzmischung mit einem Gehalt an Harz im Bereich von 50 bis 70 Gew.-% bezogen auf die wässrige Melaminharzmischung, wobei im Harz Melamin und Formaldehyd in einem Molverhältnis von 1 : 1,3 bis 1 : 2,0 vorliegen und das Harz 1 bis 10 Gew.-% einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam, jeweils bezogen auf die wässrige Melaminharzmischung, enthält.

2. Wässrige Melaminharzmischung nach Anspruch 1, wobei die Komponente M ausgewählt wird aus der Gruppe bestehend aus M1) 1 bis 5 Gew.-% Diethylenglykol, M2) 1 bis 5 Gew.-% Polyethylenglykol mit einer mittleren Molmasse von 200 bis 1500, M3) 1 bis 5 Gew.-% Glyzerin und M4) 0 bis 8 Gew.-% Caprolactam, jeweils bezogen auf die wässrige Melaminharzmischung.

3. Wässrige Melaminharzmischung nach Anspruch 1 oder 2, wobei die Komponente M ausgewählt wird aus der Gruppe bestehend aus M1) Diethylenglykol, M2) Polyethylenglykol mit einer mittleren Molmasse von 200 bis 1500 und M3) Glyzerin, jeweils bezogen auf die wässrige Melaminharzmischung.

4. Wässrige Melaminharzmischung nach den Ansprüchen 1 bis 3, wobei das Harz 3 bis 8 Gew.-% einer Komponente M enthält.

5. Wässrige Melaminharzmischung nach den Ansprüchen 1 bis 4, die 1 bis 5 Gew.-% Polyethylenglykol mit einer mittleren Molmasse von 400 bis 600 enthält.

6. Wässrige Melaminharzmischung nach den Ansprüchen 1 bis 5, die einen Trübungspunkt von 35 bis 65 °C aufweist.

7. Verfahren zur Herstellung einer wässrigen Melaminharzmischung, **dadurch gekennzeichnet, dass** man Melamin und Formaldehyd in einem Molverhältnis von 1 : 1,3 bis 1 : 2,0, in einem wässrigen Medium mit 1 bis 10 Gew.-%, bezogen auf die wässrige Melaminharzmischung, einer Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam, bei einem pH-Wert von 8 bis 10 und bei einer Temperatur von 60 bis 110 °C umsetzt.

8. Verfahren zur Herstellung einer wässrigen Melaminharzmischung, **dadurch gekennzeichnet, dass** man (i) Melamin und Formaldehyd in einem Molverhältnis von 1 : 1,3 bis 1 : 2,0, in einem wässrigen Medium mit 1 bis 10 Gew.-%, bezogen auf die wässrige Melaminharzmischung, einem Teil der Komponente M, ausgewählt aus der Gruppe bestehend aus M1) Diethylenglykol, M2) Polyethylenglykol mit einer mittleren Molmasse von 200 bis 1500, M3) Glyzerin und gegebenenfalls M4) Caprolactam bei einem pH-Wert von 8 bis 10 und bei einer Temperatur von 60 bis 110 °C umsetzt, (ii) die Reaktionsmischung auf eine Temperatur im Bereich von 10 bis 50 °C abkühlt und den unter (i) nicht-zugesetzten Teil der Komponente M zu der abgekühlten Reaktionsmischung zugibt.

9. Verwendung der in den Ansprüchen 1 bis 9 definierten Melaminharzmischung zum Tränken von saugfähigem Material.

10. Imprägnat, **dadurch** erhältlich, dass man ein saugfähiges Material mit einer wie in den Ansprüchen 1 bis 9 definierten wässrigen Melaminharzmischung behandelt und anschließend trocknet.

11. Verfahren zur Herstellung eines Verbundmaterials, wobei man ein Imprägnat, wie in Anspruch 10 definiert, unter Wärme und Druck auf ein Trägermaterial aufbringt.

12. Verbundmaterial, erhältlich nach einem Verfahren, wie in Anspruch 11 definiert.
